# EUROPÄISCHE PATENTSCHRIFT

(11) **EP 1 569 813 B1**
(45) Veröffentlichungstag und Bekanntmachung des Hinweises auf die Patenterteilung: **27.09.2006**
(21) Anmeldenummer: 03737912.0
(22) Anmeldetag: 27.05.2003
(51) Int. Cl.: B60K 31/18

(54) **Verfahren und Vorrichtung zur Regelung der Geschwindlichkeit eines Fahrzeugs**
Method and device for regulation of the speed of a vehicle
Procédé et dispositif de régulation de la vitesse d'un vehicule

(30) Priorität: 31.10.2002 DE 10250679
(43) Veröffentlichungstag der Anmeldung: 07.09.2005
(73) Patentinhaber: ROBERT BOSCH GMBH, 70442 Stuttgart (DE)
(72) Erfinder: BOECKER, Juergen, 70499 Stuttgart (DE); WINNER, Hermann, 76467 Bietigheim (DE); BRAEUCHLE, Goetz, 74934 Reichartshausen (DE)
(86) Internationale Anmeldenummer: PCT/DE2003/001719
(87) Internationale Veröffentlichungsnummer: WO 2004/039622

(56) Entgegenhaltungen:
- EP-A- 0 348 691
- DE-A- 19 743 726
- DE-A- 19 857 992
- DE-A- 19 919 888
- DE-A- 19 958 520

## Beschreibung

Die vorliegende Erfindung betrifft ein Verfahren und eine Vorrichtung zur Regelung der Geschwindigkeit eines Fahrzeugs mit Objektdetektionssystem im Sinne einer adaptiven Abstahds- und Geschwindigkeitsregelung, wobei die Abstands- und Geschwindigkeitsregelung mindestens zwei Betriebsarten aufweist. In der ersten Betriebsart wird eine Fahrzeuggeschwindigkeit zwischen Stillstand und einer Grenzgeschwindigkeit eingeregelt und in der zweiten Betriebsart eine Fahrzeuggeschwindigkeit zwischen einer Grenzgeschwindigkeit und einer maximal regelbaren Geschwindigkeit eingeregelt. Erfmdungsgemäß wird in der ersten Betriebsart bei Abwesenheit eines geschwindigkeitsbegrenzenden Objektes die Fahrzeuggeschwindigkeit über die Grenzgeschwindigkeit erhöht und danach auf die Grenzgeschwindigkeit eingeregelt.

### Stand der Technik

Aus der Veröffentlichung "Adaptive Cruise Control System - Aspects and Development Trends", SAE-Paper 961010, veröffentlicht auf der SAE International Congress and Exposition, Detroit, 26.-29.02.1996, ist ein adaptiver Abstands- und Geschwindigkeitsregler bekannt, der Radarwellen aussendet und die an Objekten reflektierten Teilwellen empfängt. Aus dem Empfangssignalen wird die Relativposition, die Relativgeschwindigkeit sowie der Abstand der Objekte zum eigenen Fahrzeug bestimmt und in deren Abhängigkeit ein leistungsbestimmendes Stellelement einer Brennkraftmaschine bzw. die Verzögerungseinrichtungen des Fahrzeugs angesteuert. Erkennt der Radarsensor kein vorherfahrendes Fahrzeug, so wird das Fahrzeug auf eine eingestellte Wunschgeschwindigkeit beschleunigt und auf dieser Geschwindigkeit gehalten. Erkennt der Radarsensor vorherfahrende Fahrzeuge, so wird von der vorher beschriebenen Geschwindigkeitsregelung auf eine Abstandsregelung umgeschaltet und das Fahrzeug folgt dem vorherfahrenden Fahrzeug in einem konstanten Abstand mit der gleichen Geschwindigkeit, die das vorherfahrende Fahrzeug vorgibt.

Aus der gattungsbildenden DE 199 58 520 A1 ist ein Geschwindigkeitsregler für ein Kraftfahrzeug bekannt, der nicht nur ab einer bestimmten Mindestgeschwindigkeit die Fahrgeschwindigkeit des Fahrzeugs regelt, sondern auch bei Geschwindigkeiten unterhalb einer vorgegebenen Grenzgeschwindigkeit bis hin zum Stillstand des Fahrzeugs die Fahrgeschwindigkeit des Fahrzeugs regelt. Durch Erfassung der Verkehrssituation durch einen Abstandssensor kann auch ein automatisches Anfahren des Fahrzeugs erfolgen, wenn der Fahrer auf einen entsprechenden Anfahrhinweis reagiert hat. Der Anfahrhinweis ist bis zu einer vorgegebenen Grenzzeit wirksam, kann alternativ jedoch auch wiederholt werden. In jeder Verkehrssituation hat der Fahrer jedoch die Möglichkeit, durch Betätigen von Gas- oder Bremspedal den Geschwindigkeitsregler zu übersteuern.

### Kern und Vorteile der Erfindung

Kern der vorliegenden Erfindung ist es, ein Verfahren und eine Vorrichtung anzugeben, die zur Regelung der Geschwindigkeit eines Fahrzeugs mit Objektdetektionssystem im Sinne einer adaptiven Abstands- und Geschwindigkeitsregelung ausgebildet ist. Dabei weist die Abstands- und Geschwindigkeitsregelung mindestens zwei Betriebsarten auf, wobei in einer ersten Betriebsart eine Fahrzeuggeschwindigkeit zwischen Stillstand und einer Grenzgeschwindigkeit einregelbar ist. Diese Betriebsart kann auch als Low-Speed-Following-ACC (LSF-ACC) bezeichnet werden, da diese Betriebsart beispielsweise für Staufolgefahrten ausgebildet ist, in denen das Fahrzeug nur mit niedrigen Geschwindigkeiten bewegt wird und häufig hinter einem vorausfahrenden Fahrzeug anhalten und wieder anfahren muss. Diese Betriebsart LSF-ACC ist demnach in der Lage, das Fahrzeug selbständig anzuhalten und wiederanzufahren, wobei das Wiederanfahren gegebenenfalls eine Fahrerbestätigung erfordert. Weiterhin ist dieser Staufolgeassistent derart ausgebildet, dass eine Grenzgeschwindigkeit nicht überschritten wird. Diese Grenzgeschwindigkeit liegt beispielsweise im Bereich von 30 km/h, die beispielsweise auch der unteren Grenzgeschwindigkeit des zweiten Betriebszustandes entspricht. In der zweiten Betriebsart ist eine Fahrzeuggeschwindigkeit zwischen einer Grenzgeschwindigkeit und einer maximal regelbaren Geschwindigkeit einregelbar. Diese zweite Betriebsart entspricht dabei im wesentlichen einem adaptiven Abstands- und Geschwindigkeitsregler, wie er im Artikel "Adaptive Cruise Control System - Aspects and Development Trends" im Stand der Technik beschrieben wurde. In dieser Betriebsart wird eine Geschwindigkeit eingeregelt, die zwischen einer minimalen Regelgeschwindigkeit, die beispielsweise die maximale Regelgeschwindigkeit der ersten Betriebsart sein kann, sowie einer maximal einregelbaren Höchstgeschwindigkeit, die beispielsweise im Bereich von 160 bis 180 km/h vorgesehen sein kann, liegt. Wird das Fahrzeug in der ersten Betriebsart bis zur ersten Geschwindigkeit beschleunigt und ist die Strecke vor dem Fahrzeug frei, so dass das Fahrzeug auch höhere Geschwindigkeiten einregeln könnte, so muss der Fahrer aufgefordert werden, das Geschwindigkeitsregelsystem von der ersten Betriebsart in die zweite Betriebsart umzuschalten. Dies ist beispielsweise durch eine optische oder akustische Anzeige möglich, wodurch jedoch die Fahreraufmerksamkeit gebunden wird und der Fahrkomfort beeinträchtigt werden kann, da eventuell nicht eindeutig feststellbar ist, aus welchem Grunde das akustische Signal ausgelöst wurde. Es ist daher der Kern der vorliegenden Erfindung, ein Verfahren und eine Vorrichtung anzugeben, die den Fahrer intuitiv, also ohne störende und ablenkende akustische bzw. optische Hinweise darauf hinweist, dass er von der ersten Betriebsart in die zweite Betriebsart wechseln soll. Erfindungsgemäß wird dies durch die Merkmale der unabhängigen Ansprüche gelöst. Vorteilhafte Weiterbildungen und Ausgestaltungen ergeben sich aus den Unteransprüchen.

Vorteilhafterweise ist, dass die Fahrzeuggeschwindigkeit dauerhaft über der Grenzgeschwindigkeit v₀ erst regelbar ist, nachdem der Fahrer ein Bedienelement betätigt hat, das den Abstands- und Geschwindigkeitsregler vom ersten Betriebszustand A in den zweiten Betriebszustand B umschaltet.

Weiterhin ist es vorteilhaft, dass im ersten Betriebszustand A eine Staufolgefahrt durchführbar ist, bei der das Fahrzeug selbständig angehalten und wiederangefahren werden kann.

Besonders vorteilhaft ist es, dass der Fahrer optisch und/oder akustisch informiert wird, wenn die Grenzgeschwindigkeit eingeregelt ist.

Weiterhin ist es vorteilhaft, dass mindestens ein fahrerbetätigbares Mittel vorgesehen ist, bei dessen Betätigung von der ersten Betriebsart A in die zweite Betriebsart B gewechselt wird.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfmdung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfmdung anhand von Zeichnungen erläutert.

Es zeigen
- Figur 1: die Geschwindigkeitsbereiche, in denen die Betriebsarten A und B aktiv sind,
- Figur 2: ein Zustands-Übergangs-Diagramm zwischen den Betriebsarten A und B,
- Figur 3: ein v-t-Diagramm des erfindungsgemäßen Verfahrens und
- Figur 4: ein schematisches Blockdiagramm eines Ausführungsbeispiels der erfindungsgemäßen Vorrichtung.

### Beschreibung von Ausführungsbeispielen

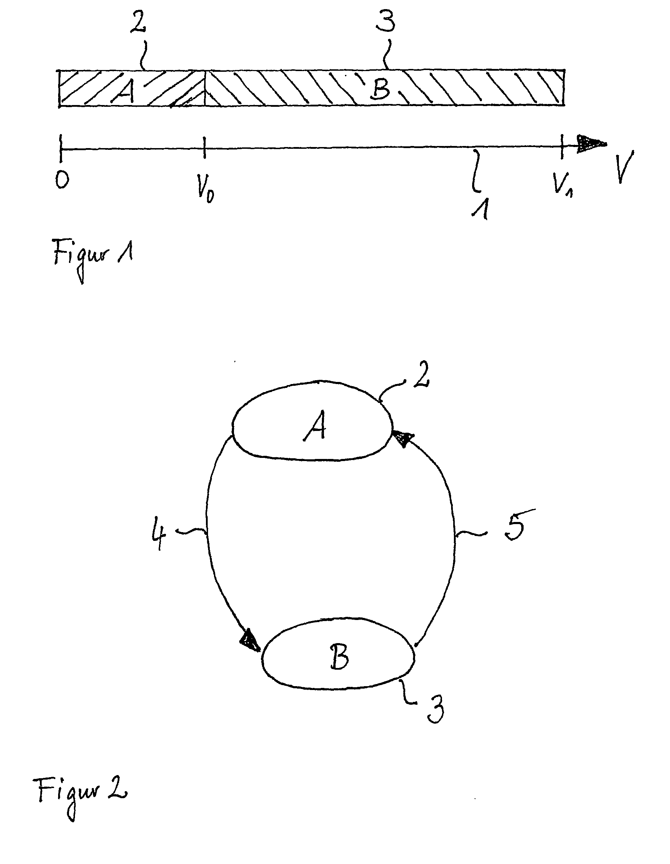

In Figur 1 ist dargestellt, in welchen Geschwindigkeitsbereichen jeweils welche Betriebsart aktivierbar ist. Zu erkennen ist die Geschwindigkeitsachse 1, deren linkes Ende die Geschwindigkeit Null repräsentiert, wobei die Geschwindigkeit nach rechts ansteigt. Weiterhin ist die Grenzgeschwindigkeit v₀ eingetragen sowie die maximal regelbare Geschwindigkeit v₁. Der Betriebszustand A, der auch als Staufolgeregler oder LSF-ACC bezeichnet werden kann, wird durch den schraffierten Block 2 dargestellt. Diese Betriebsart A ist bei Geschwindigkeiten zwischen 0 und v₀, also zwischen dem Stillstand und der Grenzgeschwindigkeit, wirksam. Weiterhin ist die zweite Betriebsart B eingetragen, deren Geschwindigkeitsbereich durch den schraffierten Bereich 3 dargestellt wird. Diese zweite Betriebsart, die den normalen Abstands- und Geschwindigkeitsregelmodus beinhaltet, ist bei Fahrzeuggeschwindigkeiten oberhalb der Grenzgeschwindigkeit v₀, die beispielsweise im Bereich von 30 bis 40 km/h und einer maximal regelbaren Geschwindigkeit v₁ von ca. 160 bis 190 km/h liegt, wirksam.

In Figur 2 ist ein Zustands-Übergangs-Diagramm dargestellt, in dem die erste Betriebsart A durch den Zustand 2 dargestellt wird, sowie die zweite Betriebsart B durch den zweiten Zustand 3 dargestellt wird. Um den ersten Betriebszustand A in den zweiten Betriebszustand B überzuführen, muss die Transition 4 ausgeführt werden. Ebenso ist bei einem Übergang vom zweiten Betriebszustand B in den ersten Betriebszustand A die Transition 5 auszuführen. Der Übergang 4, der den Staufolgeassistenten oder das LSF-ACC umschaltet auf einen herkömmlichen adaptiven Abstands- und Geschwindigkeitsregler geschieht vorzugsweise durch ein fahrerbetätigbares Bedienelement. Da mit diesem Übergang 4 eine höhere Fahrzeuggeschwindigkeit verbunden ist und der Fahrer jederzeit die Kontrolle über das Fahrzeug behalten soll, darf der Übergang 4 nicht automatisch erfolgen, sondern nur in Folge einer Fahrereingabe. Der Übergang 5, der vom herkömmlichen adaptiven Abstands- und Geschwindigkeitsregler zu einem LSF-ACC bzw. auf eine Stauassistenten umschaltet, kann hingegen durchaus automatisch erfolgen, da der Fahrer die Notwendigkeit einer Geschwindigkeitsreduzierung erkennt und diesen Übergang intuitiv nachvollziehen kann. Weiterhin ist es sogar denkbar, dass dieser Übergang 5 automatisch erfolgen soll, da bei Unterschreitung der Grenzgeschwindigkeit v₀ in der Betriebsart B, also dem herkömmlichen adaptiven Abstands- und Geschwindigkeitsregler sich dieser ansonsten deaktivieren würde und der Fahrer in Folge einer Abschaltung der Abstands- und Geschwindigkeitsregelung überrascht werden würde. Da der Übergang von der Betriebsart A in die Betriebsart B, also vom Staufolgeassistenten in den adaptiven Abstands- und Geschwindigkeitsregelmodus durch den Fahrer betätigt werden muss, ist es von Vorteil, wenn dem Fahrer des Fahrzeugs mitgeteilt wird, dass die Fahrbahn vor dem Fahrzeug frei ist, sich die vorherfahrenden Fahrzeuge schneller bewegen, als das eigene oder sogar beschleunigen, jedoch das eigene Fahrzeug in Folge der erreichten Grenzgeschwindigkeit v₀ in der Betriebsart A nicht weiter beschleunigt werden kann. Diese Mitteilung an den Fahrer sollte derart geschehen, dass sie vom Fahrer intuitiv verstanden wird und nicht bzw. nicht ausschließlich durch akustische und/oder optische Signalisiereinrichtungen mitgeteilt wird.
In Figur 2 wurden aus Gründen der Vereinfachung weitere Betriebszustände, beispielsweise der Zustand der deaktivierten Geschwindigkeitsregelung nicht dargestellt. So ist es jederzeit möglich, aus dem Betriebszustand A oder aus dem Betriebszustand B heraus die Geschwindigkeitsregelung zu deaktivieren. Bei einer Wiederaufnahme der Geschwindigkeitsregelung kann von einem Inaktivzustand der Betriebszustand A oder der Betriebszustand B aktiviert werden, je nach dem, ob die momentane Fahrzeuggeschwindigkeit oberhalb oder unterhalb der Grenzgeschwindigkeit v₀ liegt.

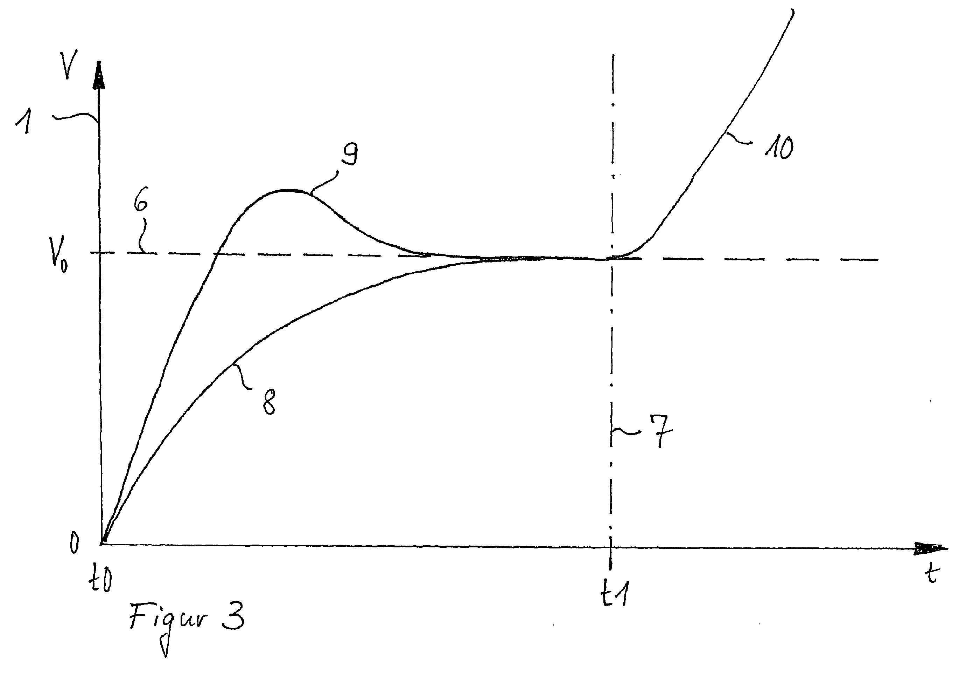

In Figur 3 ist ein v-t-Diagramm dargestellt, in dem eine kinästhetische Signalisiermöglichkeit dargestellt wird, die dem Fahrer mitteilt, dass die Grenzgeschwindigkeit v₀ in der Betriebsart A erreicht wurde und für eine weitere Fahrzeugbeschleunigung eine Eingabe seitens des Fahrers notwendig ist. Im Diagramm der Figur 3 ist auf der Abszisse eine Zeitachse aufgetragen, die bei einem beliebigen Zeitpunkt t₀ beginnt und bei dem sich das Fahrzeug beispielsweise im Stillstand befindet, wie es in Zeichnung dargestellt wurde. Auf der Ordinate 1 ist die Fahrzeuggeschwindigkeit v aufgetragen. Weiterhin ist eine waagerechte Linie 6 eingetragen, die die Grenzgeschwindigkeit v₀ darstellt, unterhalb der die Betriebsart A aktivierbar ist und oberhalb der die Betriebsart B aktivierbar ist. Bei herkömmlichen Lösungen ergibt sich eine Linie 8, gemäß der das Fahrzeug zum Zeitpunkt t₀ aus dem Stand beschleunigt wird und die Grenzgeschwindigkeit v₀ gemäß Linie 8 asymptotisch eingeregelt wird. Ist der Fahrer nicht voll auf das Fahrgeschehen konzentriert, so kann es passieren, dass der Fahrer nicht bemerkt, dass die Grenzgeschwindigkeit v₀ bereits erreicht ist und eine Eingabe seinerseits erforderlich ist, um das Fahrzeug weiter zu beschleunigen. Um dem Fahrer auf kinästhetische Weise zu signalisieren, dass eine Eingabe seinerseits notwendig ist, wird erfindungsgemäß die Fahrzeuggeschwindigkeit nach Linie 9 gesteuert. Demnach wird das Fahrzeug aus dem Stillstand zum Zeitpunkt t₀ beschleunigt und die Fahrzeuggeschwindigkeit merklich über die Grenzgeschwindigkeit v₀ erhöht. Dabei ist jedoch notwendig, dass das Objektdetektionssystem 13, mit dem das Fahrzeug ausgerüstet ist, kein Fahrzeug detektiert, das langsamer oder in zu kurzem Abstand vorausfährt und die eigene Fahrzeuggeschwindigkeit begrenzt. Nachdem die Fahrzeuggeschwindigkeit merklich über die Grenzgeschwindigkeit v₀ erhöht wurde, wird die Fahrzeuggeschwindigkeit abgesenkt und asymptotisch auf die Grenzgeschwindigkeit v₀ eingeregelt. Der Fahrer des Fahrzeugs bemerkt nun, dass sich das Fahrzeug wieder verlangsamt und, falls er eine weitere Beschleunigung wünscht, eine Eingabe seinerseits in Form einer Bedienelementbetätigung notwendig wird. Dieses Überschwingen gemäß der Linie 9 signalisiert dem Fahrer in kinästhetischer Form und komfortabler Weise, dass die Grenzgeschwindigkeit v₀ erreicht ist, der Bereich vor dem Fahrzeug für eine weitere Beschleunigung frei ist und eine Handlung seinerseits erforderlich ist. Betätigt der Fahrer beispielsweise zum Zeitpunkt t₁, der in Figur 3 durch die Linie 7 dargestellt ist, ein Bedienelement, das den Übergang 4 auslöst, der die Betriebsart A in die Betriebsart B umschaltet, so kann das Fahrzeug gemäß Linie 10 weiter beschleunigen und in einem Abstands- und Geschwindigkeitsregelmodus weiter betrieben werden.

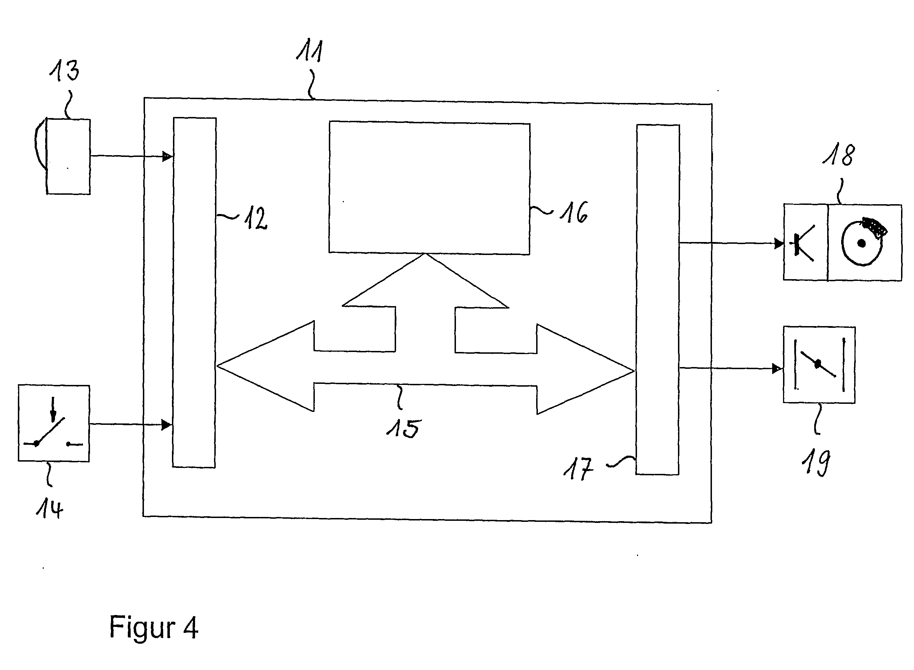

In Figur 4 ist ein Blockdiagramm der erfindungsgemäßen Vorrichtung zu erkennen, die eine Vorrichtung zur Abstands- und Geschwindigkeitsregelung 11 aufweist. Diese Abstands- und Geschwindigkeitsregelvorrichtung 11 weist eine Eingangsschaltung 12 auf, mittels der der Vorrichtung 11 Eingangssignale zuführbar sind. Als Eingangssignale sind beispielsweise Ausgangssignale eines Objektdetektionssystems 13 vorgesehen. Das Objektdetektionssystem 13 kann beispielsweise ein Radar- oder Lidarsystem sein, das elektromagnetische Strahlung aussendet und reflektierte Teilstrahlung empfängt, so dass vorherfahrende Fahrzeuge erkannt werden und deren relative Position, Relativgeschwindigkeit und deren Abstand zum eigenen Fahrzeug ermittelt werden. Diese Größen können mittels elektrischer Signale von der Objektdetektionseinrichtung 13 an die Eingangsschaltung 12 ausgegeben werden. Weiterhin ist beispielsweise ein fahrerbetätigbares Bedienelement 14 vorgesehen, mit dem der Fahrer der Vorrichtung zur Abstands- und Geschwindigkeitsregelung 11 signalisiert, dass die Betriebsart A in die Betriebsart B gewechselt werden soll und der Übergang 4 ausgelöst wird. Dieses fahrerbetätigbare Bedienelement 14 kann beispielsweise ein Tastschalter am Lenkrad, am Armaturenbrett oder an der Mittelkonsole des Fahrzeugs sein. Das Ausgangssignal dieses fahrerbetätigbaren Bedienelementes 14 wird ebenfalls der Eingangsschaltung 12 zugeführt. Die von der Eingangsschaltung 12 empfangenen Signale werden mittels eines Datenaustauschsystems 15 an eine Berechnungseinrichtung 16 weitergegeben. In der Berechnungseinrichtung 16 werden aus den Eingangsdaten Stellsignale für die Verzögerungseinrichtungen 18 sowie ein leistungsbestimmendes Stellelement einer Brennkraftmaschine 19 gemäß der momentan aktiven Betriebsart berechnet. Die Ausgangssignale werden mittels des Datenaustauschsystems 15 an eine Ausgangschaltung 17 übertragen, die die Stellsignale für die Verzögerungseinrichtung 18 des Fahrzeugs sowie ein leistungsbestimmendes Stellelement einer Brennkraftmaschine 19, das beispielsweise eine elektrisch gesteuerte Drosselklappe oder ein, die Einspritzmenge beeinflussende Einrichtung einer Kraftstoffeinspritzpumpe sein kann. Weiterhin ist es denkbar, dass die Ausgangsschaltung 17 eine akustische und/oder optische Signalisiereinrichtung ansteuert, die dem Fahrer mitteilt, ob die Grenzgeschwindigkeit v₀ erreicht ist und eine Fahrerbetätigung notwendig ist.

## Patentansprüche

1. Verfahren zur Regelung der Geschwindigkeit eines Fahrzeugs mit Objektdetektionssystem (13) im Sinne einer adaptiven Abstands- und Geschwindigkeitsregelung wobei die Abstands-und Geschwindigkeitsregelung mindestens zwei Betriebsarten (2,3) aufweist wobei in der ersten Betriebsart (2) eine Fahrzeuggeschwindigkeit zwischen Stillstand und einer Grenzgeschwindigkeit (6) einregelbar ist, und in einer zweiten Betriebsart (3) eine Fahrzeuggeschwindigkeit zwischen einer Grenzgeschwindigkeit (6) und einer maximal regelbaren Geschwindigkeit einregelbar ist, **dadurch gekennzeichnet, dass** in der ersten Betriebsart (2) bei Abwesenheit eines geschwindigkeitsbegrenzenden Objektes die Fahrzeuggeschwindigkeit über die Grenzgeschwindigkeit (6) erhöht wird und danach auf die Grenzgeschwindigkeit (6) eingeregelt wird.

2. Verfahren nach Anspruch 1, **dadurch gekennzeichnet, dass** die Fahrzeuggeschwindigkeit dauerhaft über der Grenzgeschwindigkeit (6) erst regelbar ist, nachdem der Fahrer ein Bedienelement (14) betätigt hat, das den Abstands- und Geschwindigkeitsregler vom ersten Betriebszustand (2) in den zweiten Betriebszustand (3) umschaltet.

3. Verfahren nach einem der vorhergehenden Ansprüche, **dadurch gekennzeichnet, dass** im ersten Betriebszustand (2) eine Staufolgefahrt durchführbar ist, bei der das Fahrzeug selbständig angehalten und wiederangefahren werden kann.

4. Verfahren nach einem der vorhergehenden Ansprüche, **dadurch gekennzeichnet, dass** der Fahrer optisch und/oder akustisch informiert wird, wenn die Grenzgeschwindigkeit (6) eingeregelt ist.

5. Vorrichtung zur Regelung der Geschwindigkeit eines Fahrzeugs im Sinne einer adaptiven Abstands- und Geschwindigkeitsregelung wobei die Abstands-und Geschwindigkeitsregelung mindestens zwei Betriebsarten (2,3) aufweist wobei in der ersten Betriebsart (2) eine Fahrzeuggeschwindigkeit zwischen Stillstand und einer Grenzgeschwindigkeit (6) einregelbar ist, und in einer zweiten Betriebsart (3) eine Fahrzeuggeschwindigkeit zwischen einer Grenzgeschwindigkeit (6) und einer maximal regelbaren Geschwindigkeit einregelbar ist, **dadurch gekennzeichnet, dass** Mittel (13) zur Erfassung von Objekten vor dem Fahrzeug vorgesehen sind, dass eine Berechnungseinrichtung (16) zur Ermittlung einer einzuregelnden Fahrzeuggeschwindigkeit vorgesehen ist und dass in der ersten Betriebsart (2) bei Abwesenheit eines geschwindigkeitsbegrenzenden Objektes die Fahrzeuggeschwindigkeit über die Grenzgeschwindigkeit (6) erhöht wird und danach auf die Grenzgeschwindigkeit (6) eingeregelt wird.

6. Vorrichtung nach Anspruch 5, **dadurch gekennzeichnet, dass** mindestens ein fahrerbetätigbares Mittel (14) vorgesehen ist, bei dessen Betätigung von der ersten Betriebsart in die zweite Betriebsart gewechselt wird.

## Claims

1. Method for regulating the speed of a vehicle having an object detection system (13) in the sense of an adaptive inter-vehicle distance and cruise controller, the inter-vehicle distance and cruise controller having at least two operating modes (2, 3), wherein, in the first operating mode (2), it is possible to set a vehicle speed between the stationary state and a limiting speed (6), and in a second operating mode (3), it is possible to set a vehicle speed between a limiting speed (6) and a maximum settable speed, **characterized in that**, in the first operating mode (2), when a speed-limiting object is absent the vehicle speed is increased above the limiting speed (6) and after this is set to the limiting speed (6).

2. Method according to Claim 1, **characterized in that** the vehicle speed cannot be set permanently above the limiting speed (6) until the driver has activated an operator control element (14) which switches over the inter-vehicle distance and cruise controller from the first operating state (2) into the second operating state (3).

3. Method according to one of the preceding claims, **characterized in that**, in the first operating state (2), a traffic jam follow travel mode can be carried out in which the vehicle can be independently stopped and started again.

4. Method according to one of the preceding claims, **characterized in that** the driver is informed visually and/or audibly if the limiting speed (6) is set.

5. Device for controlling the speed of a vehicle in the sense of an adaptive inter-vehicle distance and cruise controller, the inter-vehicle distance and cruise controller having at least two operating modes (2, 3), wherein, in the first operating mode (2), it is possible to set a vehicle speed between the stationary state and a limiting speed (6), and in a second operating mode (3), it is possible to set a vehicle speed between a limiting speed (6) and a maximum settable speed, **characterized in that** means (13) are provided for sensing objects in front of the vehicle, **in that** a calculation device (16) is provided for determining a vehicle speed which is to be set, and **in that**, in the first operating mode (2), when a speed-limiting object is absent the vehicle speed is increased above the limiting speed (6) and after this is set to the limiting speed (6).

6. Device according to Claim 5, **characterized in that** at least one means (14) is provided which can be activated by a driver and on whose activation the system is changed from the first operating mode into the second operating mode.

## Revendications

1. Procédé de régulation de la vitesse d'un véhicule, comprenant un système de détection d'objet (13) visant à une régulation adaptative de vitesse et de distance, la régulation de vitesse et de distance présentant au moins deux modes de fonctionnement (2, 3), selon lequel on régule la vitesse du véhicule entre l'arrêt et une vitesse limite (6) dans le premier mode de fonctionnement (2), et la vitesse du véhicule entre une vitesse limite (6) et une vitesse maximale réglable dans le deuxième mode de fonctionnement (3),
**caractérisé en ce que**
dans le premier mode de fonctionnement (2), en l'absence d'un objet limitant la vitesse, on augmente la vitesse du véhicule au-delà de la vitesse limite (6), puis on la régule sur la vitesse limite (6).

2. Procédé selon la revendication 1,
**caractérisé en ce qu'**
on régule la vitesse du véhicule durablement au-delà de la vitesse limite (6) seulement après l'actionnement par le conducteur, d'un élément de commande (14) qui fait passer le régulateur de vitesse et de distance du premier mode de fonctionnement (2) au deuxième mode de fonctionnement (3).

3. Procédé selon l'une des revendications précédentes,
**caractérisé en ce que**
dans le premier mode de fonctionnement (2), on effectue une conduite dans les embouteillages au cours de laquelle le véhicule peut être automatiquement arrêté et redémarré.

4. Procédé selon l'une des revendications précédentes,
**caractérisé en ce que**
le conducteur est informé de façon optique et/ou acoustique lorsque la vitesse limite (6) est atteinte.

5. Dispositif de régulation de la vitesse d'un véhicule visant à une régulation adaptative de vitesse et de distance, la régulation de vitesse et de distance présentant au moins deux modes de fonctionnement (2, 3), en régulant la vitesse du véhicule entre l'arrêt et une vitesse limite (6) dans le premier mode de fonctionnement (2), et la vitesse du véhicule entre une vitesse limite (6) et une vitesse maximale réglable dans un deuxième mode de fonctionnement (3),
**caractérisé par**
des moyens (13) pour l'enregistrement d'objets précédant le véhicule, et un dispositif de calcul (16) pour déterminer la vitesse du véhicule à régler, qui dans le premier mode de fonctionnement (2), en l'absence d'un objet limitant la vitesse, augmentent la vitesse du véhicule au-delà de la vitesse limite (6), puis la régule sur la vitesse limite (6).

6. Dispositif selon la revendication 5,
**caractérisé par**
au moins un moyen (14) dont l'actionnement par le conducteur permet de passer du premier mode de fonctionnement au deuxième mode de fonctionnement.
